# EUROPEAN PATENT APPLICATION

(11) **EP 1 761 090 A2**
(43) Date of publication of application: **07.03.2007**
(21) Application number: 06119838.8
(22) Date of filing: 30.08.2006
(51) Int. Cl.: H04Q 7/36

(54) **A method of spectrum sharing**

(30) Priority: 02.09.2005 GB 0517893; 03.03.2006 GB 0604304
(71) Applicant: ROKE MANOR RESEARCH LIMITED, Romsey, Hampshire SO51 0ZN (GB)
(72) Inventor: Hulbert, Anthony Pete, Southampton, Hampshire SO16 3DF (GB)
(74) Representative: Payne, Janice Julia

(57) **Abstract**

A method of spectrum sharing comprises determining a first frequency in a first location area (30) for a channel (15) of a first transmission type; and choosing a second frequency for a channel (1) of a second transmission type on which to transmit in the first location area; wherein the second frequency differs from the first frequency by at least two frequency channels of the first transmission type.

## Description

The present invention relates to a method of spectrum sharing, in particular for sharing between radio communications and radar.

There are increasing demands for making additional radio spectrum available for radio communications operation. One proposed route to achieve this is by arranging for communications systems to share spectrum with radar system. Several methods can be employed to facilitate such sharing. One approach is to share frequencies according to a spatial re-use pattern, which is a well known operation in cellular mobile communications systems. In such systems the terrain to be covered is divided into a number of cells and every cell is served by a radio base station that facilitates communications to mobile terminals operating within that cell. The base station transmits information from a core network to the mobiles, providing downlink communications paths; and receives information from the mobiles, forwarding it to the core network, providing uplink communications paths.

In such a system, re-use is facilitated by dividing the available spectrum into sub-portions, usually according to a frequency division multiple access (FDMA) structure. The number of such sub-portions is equal to a so-called cluster size of a re-use pattern. Nominally, the re-use pattern consists of a number of tessellating re-use clusters, each comprising a number, equal to the cluster size, of tessellating, hexagonally shaped cells. The base station serving each cell in a given cluster is assigned a different sub-portion of the available spectrum, so that the distance of a receiver to the nearest interfering transmitter, whether uplink or downlink, using the same spectrum sub-portion, is increased according to the cluster size.

Some radar systems also can operate according to a spatial re-use structure in which contiguous , or partially contiguous radar radiolocation coverage of a large area can be provided by a number of smaller overlapped radar coverage areas, each served by a single radar, wherein, again, a pattern of radar usage frequencies is assigned to the radars to reduce interference from interfering radars by increasing the range to the nearest radar using the same frequency, or channel

Up to now, spatial spectrum re -use patterns f or communications and radar have been considered separately. No consideration has previously been given to how such patterns might be combined to facilitate spatial sharing of spectrum between radar and radio communication in beneficial manner.

In accordance with a first aspect of the present invention, a method of spectrum sharing comprises determining a first frequency in a first location area for a channel of a first transmission type; and choosing a second frequency for a channel of a second transmission type on which to transmit in the first location area; wherein the second frequency differs from the first frequency by at least two frequency channels of the first transmission type.

The present invention describes a method for spectrum sharing which addresses the problems of interference between different types of transmissions at the same frequency in the same location area. The combined spatial re-use pattern allows both types of transmission to co-exist.

Preferably, separation of the channels is set to be an integer number of channel bandwidths.

Preferably, the frequency channel of the first transmission type has a bandwidth of between 1 and 20 MHz and the frequency channel of the second transmission type has a bandwidth of between 1 and 20 MHz

Preferably, the method further comprises setting the frequency of the channel of the second transmission type, such that it does not coincide with a frequency of a channel of the first transmission type in any further location area, said further location areas being adjacent to the first location area.

Preferably, the method further comprises setting the frequency of the channel of the second transmission type, such that it does not coincide with a frequency of a channel of the first transmission type adjacent to any further location area.

The constraints applied to the spatial re-use pattern may be very localised, or they may cover a much larger area of adjacent, or even further distant cells.

Preferably, the first transmission type is radar transmission.

Preferably, the second transmission type is communication transmission.

Preferably, the communication transmission is one of frequency division multiple access, time division multiple access, code division multiple access, orthogonal frequency division multiplex, or orthogonal frequency division multiple access.

Preferably, for sectored radio communication cells, the method further comprises setting the frequency of the channel of the radio communication, such that it does not coincide with a frequency of a channel of the radar transmission, in location areas falling within a sector of the sectored radio communication cell.

The method can be adapted for sectored communications.

Preferably, each radar transmission is in a channel which is separated from its immediate neighbour by at least one channel.

In accordance with a second aspect of the present invention, apparatus for carrying out the method of the first aspect comprises at least one radar transmitter and at least one radio communications base station; wherein, within the first location area, the base station is offset in location from the radar transmitter.

By offsetting the radar and radio communications transmitters within the location area, interference caused by the power of the radar transmission has less effect.

Preferably, the communication channel frequency is set, such that a difference in frequency between the communications channel frequency and the radar channel frequency is maximised.

It is desirable that the frequency of a channel for the radar transmission in a cell and the frequency of a channel for the radio communication transmission should be kept as far apart, in terms of difference in MHz, as possible.

Preferably, the apparatus further comprises a central processor and a store; wherein radar transmitters operating outside an exclusion area inform the processor of their frequency and intended time of transmission; and wherein the processor signals to each base station, the frequency and timescale during which communication transmissions on channels at that frequency are not permitted.

An example of a method and apparatus for spectrum sharing will now be described with reference to the accompanying drawings in which:
Figure 1 illustrates a spectrum sharing re -use pattern for a method according to the present invention; and,
Figure 2 is a block diagram of apparatus for carrying out the method of the present invention.

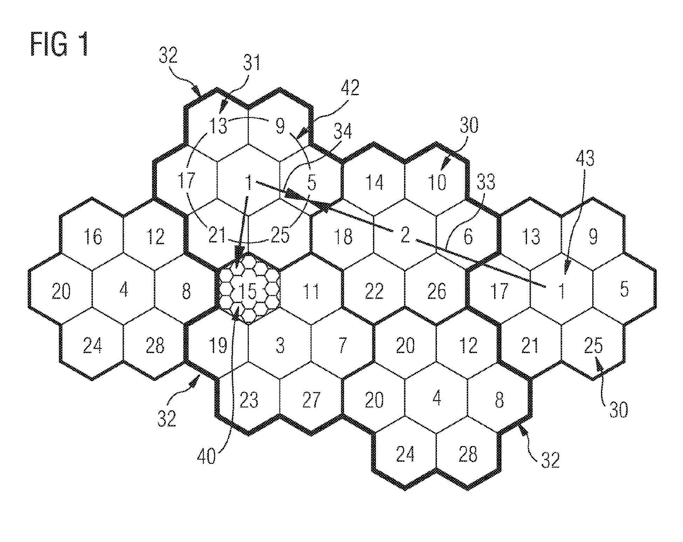

Eig.1 shows a number of radar cells 30 illustrated as larger hexagons. Each radar cell 30 contains a radar transmitter 31 at its centre and the frequency of operation of the radar transmitter is denoted by a number, *i,* contained in the cell, representing the channel of operation. The actual physical transmit frequency, *f* is derived as *fₑ* + (*i-*1)*.fₛ,* where *fₑ* is the end frequency and *fₛ* is the frequency spacing between adjacent channels. It can be seen that a re-use cluster size for the radar pattern given in the example of Fig.1 is 28. A cluster pattern 32 is formed of the cells 30 contained within the heavy outline. It can also be seen that this pattern provides considerable separation between radars using the same radio channel, as shown by arrows 33, 34 between two radar cells both using radio channel 1. Moreover, it can be observed that none of the radar cells 30 has any neighbours that use its adjacent channel, i.e. there are no neighbouring cells whose numbers are separated by only 1.

The radar cells are typically large (tens of miles). This reflects the requirements of radar detection to high altitudes and coastal radars needing a long range out to sea.

On the other hand cells for radio communications can be very small. Terminal transmit powers are limited by battery power and life and safety considerations and increasingly high bit rate requirements degrade inherent receiver sensitivity, reducing path loss capability. Furthermore, there are requirements for high capacity, supporting large numbers of users and since any given cell supports a fixed number of users, then shrinking cell sizes increases the density of users that can be supported.

Considering the requirements of a cellular system that must operate using spectrum shared with the radar system, some or all of the needs of such a system may be furnished through such spectrum sharing. Such a system can operate using any of the known cellular mobile radio multiple access schemes such as FDMA, time division multiple access (TDMA), code division multiple access (CDMA), orthogonal frequency division multiplex (OFDM) or orthogonal frequency division multiple access (OFDMA). These technologies have increasingly permitted smaller re-use clusters, thereby improving spectrum efficiency.

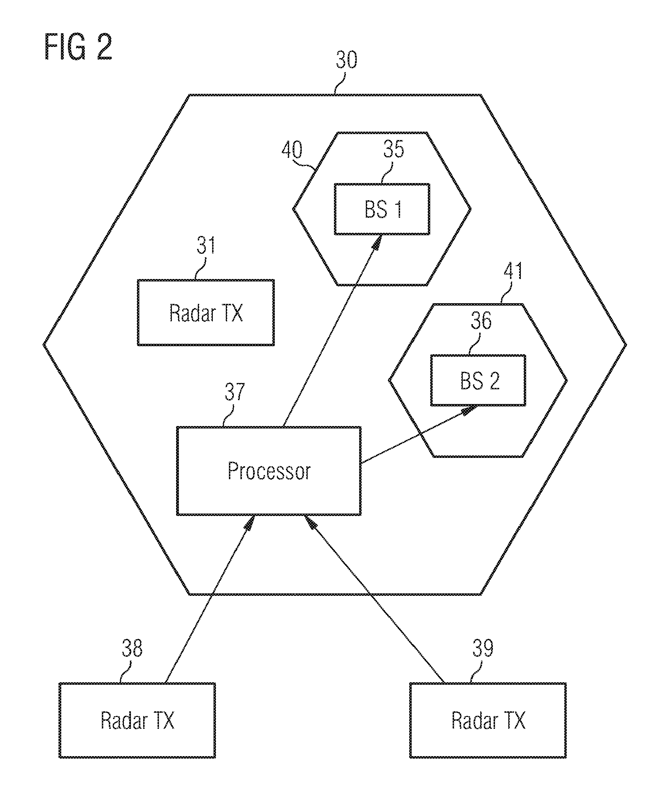

Fig.2 illustrates, in more detail a system for carrying out the method of the present invention. Within a radar cell 30, the radar transmitter 31 is provided, together with a number of radio communication base stations 35, 36 in respective radio communication cells 40, 41. Optionally, a processor 37, which may be part of the radio communication core network, is also provided.

The present invention is suitable for enabling spectrum sharing between a radar cell and a radio communications system whose cells are small enough that one or more cells, usually many, are contained within the radar cell. The general principle is to determine those frequencies that are available for sharing by the cells 40, 41 of the radio communications system on the basis of the radar cell 30 that contains the radio communications cells and to make all of the radar frequencies available for sharing apart from a subset, that are excluded, dependent upon the radar cell that contains the radio communications cells. Clearly it is necessary to exclude the frequency that is used by the radar operating in the radar cell, but also, dependent upon the relative wanted and interference path losses, additional exclusions are considered starting with excluding the adjacent channels of the radar operating in the radar cell. Another option is to exclude the alternate channels (i.e. those channels with a separation of two channel bandwidths) of the radar operating in the radar cell For additional protection against interference, channels in use by radars operating in cells surrounding the radar cell under consideration are excluded and this can be extended, as necessary, to further rings around the radar cell of interest. For sectored radio communications cells, the channels in use by those radars operating in the cells surrounding the radar cell that fall substantially within the sector are excluded from those available for radio communications.

For a sensible sized radar re-use pattern, such considerations can lead to a high efficiency of sharing with communications. For the example shown in Fig. 1, the frequency of the radar channel, its adjacent channels and channels in use by other radars operating in the cell are excluded, as described above. This is illustrated for the communication cell 40 being in a radar cell 30 having a radar operating on channel 15. Channels 3, 8, 11, 14, 15, 16, 19, 21 and 25 must be excluded from use as communications channels, but the remaining channels out of a total of 28 available channels can be used This leaves 19 cells available for re-use, i.e. about 68% of frequencies in this example.

Realistically, there could be as many as 49 frequencies, in which case excluding the applicable 9 frequencies for every cell 30 would lead to about 82% efficiency of re-use. With this number of frequencies, used in conjunction with a modern cellular communications technology, the use of multiple, possibly even all available, frequencies at any given cell site is possible.

In such a re-use scenario, the very closest cells 40, 41 to the radar might still experience interference from the radar because of the very high powers involved. In order to mitigate this coverage is arranged outside the high intensity radio transmission area, by having the radio communications base stations 35, 36 offset from the location of the radar station 31 and using radio frequencies with as large as possible a distance in MHz from the radio frequency of the radar station.

With such a sharing system it may be necessary at times to permit the operation of uncontrolled radars 38, 39, outside the re-use pattern 32 of the radar stations. When this happens, mutual interference between the communications system and those uncontrolled radars may need to be mitigated in some way. A communications infrastructure can be arranged over the core network so that the uncontrolled radar knows the frequencies it desires to operate at and there is a pre-agreed or, determined by measurement, minimum distance from radio communications cells using the same frequency and the uncontrolled radar. This can be achieved by providing information to the base stations within the exclusion zone defined by excluding, for example, the use of communications in the radar channels spaced - 2,-1,0,1 and 2 channel bandwidths from the operational frequency of the radar.. One means of achieving this is to provide addressed signalling over the core network The radio communications system 40, 41 continues operating without those designated frequency(s) until informed by another signal over the core network that they can now operate using the previously designated frequency.

It is also desirable to arrange, as appropriate, to re-plan any cellular re-use pattern for the communications system to avoid loss of coverage and/or to make capacity, albeit reduced, more uniform.

One method of determining those cells for which the designated frequency must be disabled is to have one or more centralised control computers 37 for both the communications system. This or these computer (s) hold data, including location and frequencies in use for all, or a significant subset of all, radio base stations 35, 36 in the system. The uncontrolled radar ope rator, either manually or automatically, accesses this computer, sending the designated frequency for its operation and its location as inputs. It may also input the minimum range parameter or this can be accessed from a database either as a single value cr according to parameters (such as antenna pattern, transmit power) provided by the radar. Upon secure handshake, the computer accesses the information to compute the addresses of all cell sites that fall within the exclusion zone. Any radio communication cells 40, 41 that have been operating the designated frequency are instructed by signalling over a network, such as the core network, to stop using it within a specified time frame such that the exclusion zone is cleared in time for the uncontrolled radar to come into operation without unacceptable interference. Similarly, on completion of operation of the radar the same computer issues signals to the same radio base station 35, 36 that resumption of operation on the previously designated frequency is now permitted.

## Claims

1. A method of spectrum sharing, the method comprising determining a first frequency in a first location area for a channel of a first transmission type; and choosing a second frequency for a channel of a second transmission type on which to transmit in the first location area; wherein the second frequency differs from the first frequency by at least two frequency channels of the first transmission type.

2. A method according to claim 1, wherein separation of the channels is set to be an integer number of channel bandwidths.

3. A method according to claim 1 or claim 2, wherein the frequency channel of the first transmission type has a bandwidth of between 1 and 20 MHz

4. A method according to any preceding claim, wherein the frequency channel of the second transmission type has a bandwidth of between 1 and 20 MHz

5. A method according to any preceding claim, wherein the method further comprises setting the frequency of the channel of the second transmission type, such that it does not coincide with a frequency of a channel of the first transmission type in any further location area, said further location areas being adjacent to the first location area.

6. A method according to claim 5, wherein the method further comprises setting the frequency of the channel of the second transmission type, such that it does not coincide with a frequency of a channel of the first transmission type adjacent to any further location area.

7. A method according to any preceding claim, wherein the first transmission type is radar transmission.

8. A method according to any preceding claim, wherein the second transmission type is communication transmission.

9. A method according to claim 8, wherein the communication transmission is one of frequency division multiple access, time division multiple access, code division multiple access, orthogonal frequency division multiplex, or orthogonal frequency division multiple access.

10. A method according to claim 7 and claim 8, wherein, for sectored radio communication cells, the method further comprises setting the frequency of the channel of the radio communication, such that it does not coincide with a frequency of a channel of the radar transmission, in location areas falling within a sector of the sectored radio communication cell.

11. A method according to at least claim 7, wherein each radar transmission is in a channel which is separated from its immediate neighbour by at least one channel.

12. Apparatus for carrying out the method of any preceding claim, the apparatus comprising at least one radar transmitter and at least one radio communications base station; wherein, within the first location area, the base station is offset in location from the radar transmitter.

13. Apparatus according to claim 12, wherein the communication channel frequency is set, such that a difference in frequency between the communications channel frequency and the radar channel frequency is maximised.

14. Apparatus according to claim 12, the apparatus further comprising a central processor and a store; wherein radar transmitters operating outside an exclusion area inform the processor of their frequency and intended time of transmission; and wherein the processor signals to each base station, the frequency and timescale during which communication transmissions on channels at that frequency are not permitted.
